# FASCICULE DE BREVET EUROPEEN

(11) **EP 0 988 799 B1**
(45) Date de publication et mention de la délivrance du brevet: **03.03.2004**
(21) Numéro de dépôt: 99201819.2
(22) Date de dépôt: 08.06.1999
(51) Int. Cl.: A23L 1/39

(54) **Sauce de type béchamel**
Bechamelähnliche Sosse
Bechamel sauce-type

(30) Priorité: 22.09.1998 EP 98203177
(43) Date de publication de la demande: 29.03.2000
(73) Titulaire: SOCIETE DES PRODUITS NESTLE S.A., 1800 Vevey (CH)
(72) Inventeur: Brongniart, Laurence, 95290 L'Isle Adam (FR); Ferrari-Philippe, Fabiana, 60000 Beauvais (FR)
(74) Mandataire: Thomas, Alain

(56) Documents cités:
- EP-A- 0 689 770
- WO-A-96/03057
- PATENT ABSTRACTS OF JAPAN vol. 010, no. 383 (C-393), 23 décembre 1986 (1986-12-23) & JP 61 173758 A (NIPPON OIL & FATS CO LTD), 5 août 1986 (1986-08-05)
- THEBAUDIN, J.Y; LEFEBVRE A.C; DOUBLIER J-L: "Rheology of Starch Pastes from Starches of Different Origins: Applications to Starch-based Sauces" LEBENSMITTEL-WISSENSCHAFT UND -TECHNOLOGIE, vol. 31, no. 4, 5 janvier 1998 (1998-01-05), pages 354-360, XP002093240 FRANCE

## Description

La présente invention a pour objet une sauce de type béchamel.

Traditionnellement il est connu de réaliser des sauces de type béchamel.

Le Larousse Gastronomique, Edt Larousse 1996, décrit la préparation d'une sauce de type béchamel dans laquelle le beurre est fondu sur feu doux, puis la farine est ajoutée tout en tournant vivement pour obtenir un mélange lisse, sans coloration. Le lait est alors versé sur ce mélange tout en fouettant, de manière à éviter la formation de grumeaux. La sauce béchamel ainsi réalisée est salée et poivrée puis passée au chinois-étamine, de manière à ce qu'elle présente une texture bien lisse.

De plus, le brevet JP 61173758 décrit la préparation d'un roux dans laquelle la matière grasse et un sucroester d'acide gras sont mélangés avec de l'amidon, de manière à abaisser la température de gélification de l'amidon lors de la réalisation du roux. EP 689 770 divulgue une sauce béchamel ayant une viscosité constante entre 30°C et 80°C.

De telles sauces présentent souvent une texture rugueuse sur le palais et subissent, lors du stockage, des modifications importantes de leur structure physique et de leurs qualités organoleptiques qui peuvent être irréversibles.

La présente invention a pour but de proposer une sauce de type béchamel dont la stabilité au cisaillement et à la congélation-décongélation est accrue, et qui présente un aspect brillant et une texture homogène, lisse et crémeuse.

A cet effet, la sauce de type béchamel selon la présente invention présente une variation de viscosité mesurée à 10 s⁻¹ inférieure à 10% pour deux traitements de cisaillement distincts et/ou après un ou plusieurs cycles de congélation-décongélation selon la revendication 1.

Dans la présente description, on emploie l'expression "sauce de type béchamel" pour désigner, notamment, des sauces blanches ou des sauces béchamel, soit des sauces à base de farine, huile ou graisse et eau additionnée ou non de lait en poudre.

La présente sauce de type béchamel présente une teneur en eau de 68-95% en poids et comprendre 0,3-1,6% de sel, 1,6-10% de matière grasse, 0-10% de lait en poudre, 0-6% d'amidon modifié et 2,7-8% de farine.

La sauce de type béchamel selon la présente invention présenter une telle variation de viscosité inférieure à 10%, autrement dit une telle stabilité au cisaillement et/ou à la congélation-décongélation, lorsqu'elle comprend 0,3-2%, par rapport à la quantité de farine qu'elle contient, d'un émulsifiant tel que la lécithine, un stearoyl lactylate, un monoglycéride ou un ester de monoglycéride et d'acide di-acétyl tartarique (DATEM).

La présente sauce de type béchamel peut être préparée par mélange de tous les ingrédients dans un mélangeur traditionnel de l'industrie alimentaire, chauffage et cuisson à une température de 90-100°C durant 3-10 min et refroidissement à température ambiante.

Chauffage et cuisson peuvent être réalisés dans une cuve à double paroi à agitateur durant 5-10 min ou, de préférence et grâce à la stabilité au cisaillement de la sauce, dans un échangeur de chaleur à surface raclée durant 3-4 min, par exemple.

Le refroidissement peut être réalisé par attente à température et pression ambiante ou sous vide ou, de préférence et grâce à la stabilité au cisaillement de la sauce, dans un échangeur de chaleur à surface raclée, par exemple.

Lors d'un tel refroidissement, la sauce peut être typiquement soumise au cisaillement dû à une vitesse de rotation de 100-330 rpm dans un échangeur à surface raclée comprenant deux rotors ou racleurs et présentant un diamètre intérieur de 120 à 180 mm, par exemple.

La viscosité de la sauce de type béchamel selon la présente invention peut être mesurée dans un viscosimètre Rheometrics Fluids Spectrometer RFS II commercialisé par Rheometric Scientific, Espace Descartes, 7, rue Albert Einstein, F-77420 CHAMP SUR MARNE, par exemple.

On a constaté avec surprise que la sauce de type béchamel selon la présente invention présente une stabilité accrue lors du refroidissement après cuissson, c'est-à-dire que la viscosité varie de moins de 10% pour une vitesse de rotation des racleurs de 150 et de 300 tours par minute dans un échangeur présentant un diamètre intérieur de 150 mm. De plus, cette sauce possède une meilleure stabilité au cours du stockage, en particulier après un ou plusieurs cycles de congélation et décongélation comprenant une étape de congélation à -30°C pendant au moins 3 h et une étape de décongélation à 20-30°C pendant 2-8 h, par exemple..

La sauce de type béchamel selon la présente invention présente une teneur en eau de 68-95% en poids et comprendre, en % en poids de la sauce, 0,3-. 1,6% de sel, 1,6-10% de matière grasse, 0-10% de lait en poudre, 0-6% d'amidon modifié et 2,7-8% de farine, ainsi que, en % du poids de la farine, 0,3-2% d'un émulsifiant tel que la lécithine, un stearoyl lactylate, un monoglycéride ou un ester de monoglycéride et d'acide di-acétyl tartarique (DATEM).

Ces émulsifiants, du fait de leurs interactions avec les autres ingrédients contenus dans la sauce de type béchamel, notamment avec la farine, permettent de réaliser une sauce présentant une bonne texture.

La matière grasse, qui a un effet sur la texture de la sauce de type béchamel et sur le plan gustatif, peut être de l'huile de tournesol, de l'huile de soja, de l'huile d'olive, de l'huile d'arachide, de l'huile de palme, de l'huile de colza, du beurre ou de la margarine, par exemple.

Le lait peut être du lait en poudre entier ou écrémé, par exemple.

L'amidon modifié peut être de l'amidon modifié de pomme de terre, de maïs, de blé ou de tapioca, par exemple. On peut incorporer à la préparation de la sauce de type béchamel de l'amidon modifié, de manière à lui conférer une certaine stabilité lors de sa préparation et lors de son stockage à températures réfrigérées ou à températures de congélation.

La farine, qui a un effet liant, peut être de la farine de blé tendre, de blé dur, de riz ou de maïs, par exemple.

On peut encore incorporer à la sauce de type béchamel selon la présente invention des colorants, du fromage, des herbes et/ou des épices, par exemple.

La sauce de type béchamel selon la présente invention présene un aspect brillant et une texture lisse et crémeuse.

Cette sauce de type béchamel présente une stabilité accrue au cisaillement et à la congélation-décongélation. Elle présente également une bonne stabilité au stockage grâce à une faible perte en eau.

On peut avantageusement utiliser cette sauce de type béchamel pour la fabrication de plats cuisinés congelés ou réfrigérés, notamment des lasagnes, des mets de viandes ou des mets de poisson.

La présente invention est décrite plus en détails à l'aide des tests et exemples non limitatifs ci-après. Dans ces tests et dans ces exemples, les pourcentages sont donnés en poids sauf indication contraire.

### Test 1: Mesures comparatives de la viscosité de sauces de type béchamel soumises à différents niveaux de cisaillement lors du refroidissement ainsi qu'à plusieurs cycles de congélation-décongélation

On prépare une sauce de type béchamel témoin 1 sans émulsifiant (échantillon 1), une sauce de type béchamel témoin 2 contenant un émulsifant qui ne marche pas pour la présente invention (échantillon 2) et 4 sauces de type béchamel selon la présente invention (échantillons 3, 4, 5, et 6). On compare alors les mesures de viscosité de ces 6 sauces pour deux vitesses de cisaillement appliquées au cours du refroidissement dans un échangeur à surface raclée.

Pour la préparation de la sauce de type béchamel témoin, on mélange sous agitation, à 95°C, pendant 10 min 16,12 kg d'eau, 0,16 kg de sel, 0,8 kg d'huile de tournesol, 1,6 kg de lait en poudre, 0,32 kg d'amidon modifié de maïs et 1kg de farine.

Puis on refroidit la sauce de type béchamel ainsi réalisée à 12°C dans un échangeur à surface raclée de type Contherm (commercialisé par Alfa Laval) référence 6 x 3. On applique deux vitesses de cisaillement différentes (150 et 300 tours par minute).

Pour la préparation des 5 sauces de type béchamel contenant un émulsifiant, on procède de la manière telle que décrite précédement, à l'exception du fait que, pour chacune de ces sauces, on ajoute au mélange de départ 1,5% d'un émulsifiant, par rapport à la quantité de farine.

Puis on mesure la viscosité de chacune de ces sauces à l'aide du viscosimètre de type Rheometrics Fluids Spectrometer RFS II commercialisé par Rheometric Scientific, Espace Descartes, 7, rue Albert Einstein, F-77420 CHAMP SUR MARNE. On enregistre ainsi une courbe d'écoulement pour des vitesses de cisaillement de 0 à 500 s⁻¹. De cette courbe, on extrait la valeur de viscosité à 10 s⁻¹. Ces mesures sont réalisées sur les sauces refroidies à une vitesse de rotation de 150 tours par minute et sur les sauces refroidies à une vitesse de rotation de 300 tours par minute. On compare alors pour chaque échantillon la variation de viscosité entre la sauce refroidie à 150 tours par minute et la sauce refroidie à 300 tours par minute.

De manière semblable on compare la viscosité des six sauces avant et après trois cycles de congélation-décongélation comprenant chacun une étape de congélation et de stockage à -30°C pendant au moins 8 jours et une étape de décongélation à + 30°C pendant 2 h.

L'ensemble des mesures de viscosité sont mentionnées dans le tableau I ci-après.

**Tableau I**

| sauce de type Béchamel Echantillon No | Emulsifiant | Variation de viscosité mesurée à 10 s-1 pour deux vitesses de refroidissement au cours du procédé | Variation de viscosité mesurée à 10 s-1 avant et après trois cycles de congélation-décongélation |
|---|---|---|---|
| 1 (témoin 1) | - | 19,93% | 12,24% |
| 2 (témoin 2) | Sucroglycéride | 13,53% | 31,87% |
| 3 | Lécithine | 9,73% | 8,9% |
| 4 | Stéaroyl lactylate | 0,32% | 19,62% |
| 5 | Monoglycéride | 8,59% | 3,37% |
| 6 | Ester de monoglycéride et d'acide di-acétyl tartarique | 9,68% | 0,36% |

Les mesures mentionnées dans le tableau I mettent en évidence le fait que les sauces de type béchamel selon la présente invention présentent une texture plus stable au cisaillement et/ou à la congélation-décongélation que les sauces de type béchamel témoin 1 (pas d'émulsifiant) et témoin 2 (émulsifiant qui ne marche pas pour la présente invention). En effet, la variation de viscosité des sauces de type béchamel selon la présente invention entre les deux vitesses de cisaillement et/ou avant et après trois cycles de congélation-décongélation est inférieure à 10%.

### Exemple 1

On prépare des lasagnes à l'aide d'une sauce de type béchamel selon la présente invention.

Pour ce faire, on prépare une sauce de type béchamel. On mélange, sous agitation, à 95°C, pendant 10 min 7,58 kg d'eau, 0,06 kg de sel, 0,96 kg d'huile de tournesol, 0,9 kg de lait en poudre, 0,14 kg d'amidon modifié de maïs, 0,4 kg de farine et 0,004 kg de DATEM.

Puis on refroidit à 12°C la sauce de type béchamel ainsi préparée.

Parallèlement, on prépare une sauce de type bolognaise en mélangeant 3,4 kg de tomates pelées, 0,8 kg d'huile de tournesol, 2,7 kg d'eau, 0,7 kg de carottes, 1,6 kg de viande hâchée, 0,8 kg d'oignons, 0,02 kg de basilic, 0,1 kg de sel et 0,1 kg de poivre.

On dispose alors au fond d'un plat rectangulaire une couche de pâtes lasagne, sur laquelle on dépose une couche de bolognaise. On effectue ainsi trois superpositions avant de déposer une dernière couche de pâtes lasagne que l'on recouvre d'une couche de béchamel selon la présente invention.

## Revendications

1. Sauce de type béchamel, presentant une variation de viscosité mesurée à 10 s-1 inférieure à 10% pour deux traitements de cisaillement distincts et/ou avant et après un ou plusieurs cycles de congélation-décongélation, **caractérisée par le fait qu'**elle présente une teneur en eau de 68-95%, par rapport à son poids total, et qu'elle comprend 0,3-1,6% de sel, 1,6-10% de matière grasse, 0-10% de lait en poudre, 0-6% d'amidon modifié et 2,7-8% de farine et qu'elle comprend 0,3-2%, par rapport à la quantité de farine qu'elle contient, d'un émulsifiant choisi dans un groupe comprenant la lécithine, un stearoyl lactylate, un monoglycéride, un ester de monoglycéride et d'acide di-acétyl tartarique et leurs mélanges.

2. Sauce selon la revendications 1, **caractérisée par le fait qu'**elle présente une texture lisse et un aspect brillant.

3. Utilisation d'une sauce de type béchamel selon l'une des revendications 1 à 2 pour la fabrication d'un plat cuisiné.

## Patentansprüche

1. Soße vom Typ Bechamelsoße, die bei zwei verschiedenen Scherungsbehandlungen und/oder vor und nach einem oder mehreren Tiefgefrier/Auftauzyklen eine bei 10 s⁻¹ gemessene Viskositätsänderung von weniger als 10% aufweist, **dadurch gekennzeichnet, daß** sie einen Wassergehalt von 68-95%, bezogen auf ihr Gesamtgewicht, besitzt, daß sie 0,3-1,6% Salz, 1,6-10% Fett, 0-10% Milchpulver, 0-6% modifizierte Stärke und 2,7-8% Mehl enthält und daß sie, bezogen auf die in ihr enthaltene Mehlmenge, 0,3-2% eines Emulgators enthält, der aus einer Gruppe ausgewählt ist, die Lecithin, Stearoyllactylat, Monoglycerid, Diacetylweinsäuremonoglycerid und ihre Mischungen umfaßt.

2. Soße nach Anspruch 1, **dadurch gekennzeichnet, daß** sie eine glatte Textur und ein glänzendes Aussehen besitzt.

3. Verwendung einer Soße vom Typ Bechamelsoße nach einem der Ansprüche 1 bis 2 für die Herstellung eines Fertiggerichts.

## Claims

1. Sauce of the béchamel type having a variation in viscosity measured at 10 s-1 of less than 10 % for two separate shearing treatments and/or before and after one or more freezing/thawing cycles, **characterised in that** it has a water content of from 68 to 95 %, based on its total weight, **in that** it contains from 0.3 to 1.6 % salt, from 1.6 to 10 % fat, from 0 to 10 % powdered milk, from 0 to 6 % modified starch and from 2.7 to 8 % flour, and **in that** it contains from 0.3 to 2 %, based on the quantity of flour it contains, of an emulsifier selected from the group consisting of lecithin, a stearoyl lactylate, a monoglyceride, a monoglyceride ester and diacetyltartaric acid and mixtures thereof.

2. Sauce according to claim 1, **characterised in that** it has a smooth texture and a glossy appearance.

3. Use of a sauce of the béchamel type according to either claim 1 or claim 2 in the preparation of a cooked dish.
